# EUROPÄISCHE PATENTANMELDUNG

(11) **EP 4 663 901 A1**
(43) Veröffentlichungstag der Anmeldung: **17.12.2025**
(21) Anmeldenummer: 25175235.8
(22) Anmeldetag: 09.05.2025
(51) Int. Cl.: F01D 9/04, F01D 25/06, F01D 25/24, F01D 25/04, B22F 5/04, B33Y 10/00

(54) **SCHAUFELANORDNUNG FÜR EINE AXIAL DURCHSTRÖMBARE THERMISCHE STRÖMUNGSMASCHINE UND AXIAL DURCHSTRÖMBARE THERMISCHE STRÖMUNGSMASCHINE**

(30) Priorität: 10.06.2024 DE 102024116172
(71) Anmelder: MTU Aero Engines AG, 80995 München (DE)
(72) Erfinder: von Brauneck, Dennis, 80995 München (DE)

(57) **Zusammenfassung**

Eine Schaufelanordnung für eine axial durchströmbare thermische Strömungsmaschine umfasst einen Leitschaufelring mit zumindest zwei entlang einer Umfangsrichtung U der Strömungsmaschine angeordneten Leitschaufelelementen 10. Jedes Leitschaufelelement 10 der zumindest zwei Leitschaufelelemente 10 weist zumindest ein Schaufelblatt 22 auf, das an seinem radial äußeren Ende eine mit dem zumindest einen Schaufelblatt 22 einstückig verbundene Plattform 12 umfasst. Von der Plattform 12 ragt an dessen radial äußerer Seite zumindest ein Hakenabschnitt 14 in radialer Richtung ab. Der zumindest eine Hakenabschnitt 14 bildet in radialer Richtung eine Tasche 24 des Leitschaufelelements 10 aus. Die Tasche 24 ist durch den zumindest einen Hakenabschnitt 14, das Leitschaufelelement 10 und die Plattform 12 begrenzt. Die Tasche 24 ist in axialer Richtung der Strömungsmaschine zu einer Seite hin offen. Die Schaufelanordnung umfasst zumindest ein Dämpfungselement 20. Das Dämpfungselement 20 ist in der Tasche 24 angeordnet und verbindet in der Umfangsrichtung U zumindest zwei benachbarte Leitschaufelelemente 10. Eine axial durchströmbare thermische Strömungsmaschine umfasst die Schaufelanordnung.

## Beschreibung

Die Erfindung betrifft eine Schaufelanordnung für eine axial durchströmbare thermische Strömungsmaschine mit einem Leitschaufelring und einem Dämpfungselement. Ferner betrifft die Erfindung eine axial durchströmbare thermische Strömungsmaschine mit der Schaufelanordnung.

Strömungsmaschinen, insbesondere thermische Strömungsmaschinen beziehungsweise Gasturbinen beziehungsweise Fluggasturbinen weisen sowohl Leitschaufeln als auch Laufschaufeln auf. Die Leitschaufeln sind dabei auf Leitschaufelkränzen beziehungsweise Leitschaufelringen angeordnet, während die Laufschaufeln auf Laufschaufelkränzen beziehungsweise Laufschaufelringen angeordnet sind. Strömungsmaschinen weisen oft mehrere dieser Schaufelkränze oder Schaufelringe als hintereinanderliegende Stufen auf, welche entlang einer Richtung einer Welle der jeweiligen Strömungsmaschine (axiale Richtung) angeordnet sind. Die Aufgabe der Laufschaufeln besteht darin, die Leistung zum Durchleiten eines Gases durch die Strömungsmaschine bereitzustellen. Zu diesem Zweck sind die Laufschaufeln auf einem Rotor der Strömungsmaschine angeordnet und rotieren während des Betriebs entlang einer Umfangsrichtung. Die Leitschaufeln sind dagegen an einem Stator angeordnet und sind während des Betriebs statisch. Die Aufgabe der Leitschaufeln besteht darin, die durch die Strömungsmaschine strömende Strömung entsprechend zu führen, damit die Strömung in einem vorbestimmten Winkel auf die Laufschaufeln zugeführt wird. Hierbei sind die Leitschaufeln zumeist aus Einzelschaufeln aufgebaut, und diese Ausführung weist den Vorteil auf, dass ein gutes Dämpfungsverhalten erzielt wird. Jedoch kann eine Herstellung der Leitschaufeln als Leitschaufelelemente mit jeweils mehreren Schaufelblättern vorteilhaft sein. Diese Segmente mit mehreren Schaufelblättern haben theoretisch eine verringerte Eigendämpfung im Vergleich zu einer Ausführung aus Einzelschaufeln. Die geringere Dämpfung kann zu stärkeren Resonanzen und zu höheren Amplituden von Eigenschwingungen führen, was wiederum zu Materialspannungen beziehungsweise einer schlechteren Zeitschwingfestigkeit beziehungsweise Betriebsfestigkeit führen kann, was nachteilig ist.

Es ist damit eine Aufgabe der Erfindung, eine Schaufelanordnung bereitzustellen, die ein verbessertes Resonanzverhalten, ein verbessertes Eigenschwingungs-Dämpfungsverhalten und zudem eine einfache Herstellbarkeit der Leitschaufelelemente aufweist.

Diese Aufgaben werden erfindungsgemäß durch eine Schaufelanordnung einer axial durchströmbaren thermischen Strömungsmaschine gemäß Anspruch 1 gelöst. Ferner werden die Aufgaben der Erfindung erfindungsgemäß durch eine axial durchströmbare thermische Strömungsmaschine nach einem weiteren unabhängigen Anspruch gelöst. Vorteilhafte Ausgestaltungen mit zweckmäßigen Weiterbildungen sind in den jeweiligen Unteransprüchen angegeben, wobei vorteilhafte Ausgestaltungen jedes Erfindungsaspekts als vorteilhafte Ausgestaltungen der jeweils anderen Aspekte und umgekehrt anzusehen sind.

Die Erfindung basiert auf der Idee, ein Dämpfungselement bereitzustellen, das mehrere Leitschaufelelemente miteinander in Umfangsrichtung verbindet, und eine Dämpfung beziehungsweise eine Reibung des Dämpfungselements an den Leitschaufelelementen bereitstellt, um eine Schwingungsenergie einer Eigenschwingung zu dissipieren. Dies kann zu einem verbesserten Zeitschwingfestigkeitsverhalten führen.

Gemäß einer Ausgestaltung der Erfindung ist eine Schaufelanordnung für eine axial durchströmbare thermische Strömungsmaschine bereitgestellt, die einen Leitschaufelring mit zumindest zwei entlang einer Umfangsrichtung der Strömungsmaschine angeordneten Leitschaufelelementen und zumindest einem Dämpfungselement umfasst. Jedes Leitschaufelelement der zumindest zwei Leitschaufelelemente weist zumindest ein Schaufelblatt auf, das an seinem radial äußeren Ende eine mit dem zumindest einen Schaufelblatt einstückig verbundene Plattform umfasst, wobei von der Plattform an dessen radial äußerer Seite zumindest ein Hakenabschnitt in radialer Richtung abragt, wobei der Hakenabschnitt in radialer Richtung eine Tasche des Leitschaufelelements ausbildet, die durch den Hakenabschnitt, das Leitschaufelelement und die Plattform begrenzt ist und in axialer Richtung der Strömungsmaschine zu einer Seite hin offen ist. Das zumindest eine Dämpfungselement ist in der Tasche angeordnet. In einer bevorzugten Ausgestaltung kann das Dämpfungselement so dimensioniert und angeordnet sein, dass es in Umfangsrichtung zumindest zwei benachbarte Leitschaufelelemente verbindet, d.h. den Spalt bzw. umfangsseitigen Stoß zwischen den Leitschaufelelementen überbrückt.

Mit anderen Worten, die Schaufelanordnung umfasst zumindest zwei Leitschaufelelemente, die in der Umfangsrichtung der Strömungsmaschine angeordnet sind. Eine axiale / radiale Richtung bezeichnet hierbei jeweils eine axiale / radiale Richtung der Strömungsmaschine. Jedes Leitschaufelelement weist zumindest ein Schaufelblatt auf, und an dessen radial äußeren Ende ist eine Plattform angeordnet, die vorzugsweise zwei, drei oder mehr Schaufelblätter verbindet. Die Plattform ist vorzugsweise einstückig mit den Schaufelblättern ausgebildet.

An der radial äußeren Seite der Plattform ist der / sind die Hakenabschnitt(e) angeordnet. Vorzugsweise sind zwei Hakenabschnitte bereitgestellt, wobei ein Hakenabschnitt eine Tasche bildet, die in stromaufwärtige Richtung geöffnet ist und ein Hakenabschnitt eine Tasche bildet, die in stromabwärtige Richtung geöffnet ist. Die Tasche(n) ist/sind damit in einer gedachten Schnittebene senkrecht zur Umfangsrichtung in Bezug auf die radiale Richtung seitlich angeordnet. In diesem Fall wird durch die T-förmige Anordnung der Hakenabschnitte ausreichend Platz geschaffen, um die Taschen einzubringen, die die Dämpfungselemente aufnehmen. Die Taschen sind vorzugsweise in Umfangsrichtung kontinuierlich ausgebildet, so dass ein Dämpfungselement in die Tasche eingefügt werden kann, das sich entlang der Umfangsrichtung erstreckt.

Durch die einstückige Ausbildung kann das Leitschaufelelement insgesamt weicher ausgeführt werden als in dem Fall einer Ausführung ohne die Hinterschneidungen beziehungsweise die Hakenabschnitte, und es wird eine Integration der Dämpfungselemente ermöglicht und zudem eine ausreichend nutzbare Bewegung in dem Deckband erzeugt. Das bedeutet, dass eine Beweglichkeit geschaffen ist, und Bewegungen des Leitschaufelelements können wiederum über eine Reibung des Dämpfungselements an dem Leitschaufelelement dissipiert werden. Die Dämpfungselemente können segmentübergreifend, partiell oder als Ring beziehungsweise als überlappendes C-Blech ausgeführt und montiert sein.

Die Erfindung weist somit den Vorteil auf, dass durch eine Reibung zwischen dem Dämpfungselement und dem Leitschaufelelement eine Dämpfung von Schwingungen beziehungsweise Bewegungen geschaffen wird, und ferner, dass durch die Ausbildung des Leitschaufelelements mit mehreren Schaufelblättern eine kostengünstige einfache Fertigung ermöglicht ist.

Die Erfindung umfasst weitere vorteilhafte Ausgestaltungen, die nachstehend weiter beschrieben sind.

Gemäß einer weiteren vorteilhaften Ausgestaltung ist vorgesehen, dass die Tasche jedes Leitschaufelelements der zumindest zwei Leitschaufelelemente in radialer Richtung eine Hinterschneidung des Leitschaufelelements ausbildet. Mit anderen Worten, eine Hinterschneidung, das heißt eine Taschenbildung, des Leitschaufelelements in radialer Richtung ermöglicht ein formschlüssiges Halten des Leitschaufelelements in dem Gehäuse, und zudem bildet die Hinterschneidung die Tasche, in die das Dämpfungselement eingesetzt werden kann. Die Hinterschneidung kann derart ausgebildet sein, dass sie das Dämpfungselement formschlüssig hält beziehungsweise kann die Hinterschneidung so ausgebildet sein, dass das Dämpfungselement durch das Gehäuse in der Tasche gehalten wird. Diese Ausführung weist den Vorteil auf, dass das Dämpfungselement besonders gut gehalten werden kann.

Gemäß einer weiteren vorteilhaften Ausgestaltung ist vorgesehen, dass jedes Leitschaufelelement der zumindest zwei Leitschaufelelemente mittels eines additiven Herstellungsverfahrens hergestellt ist. Mit anderen Worten, das Leitschaufelelement kann durch ein additives beziehungsweise generatives Fertigungsverfahren hergestellt sein, das beispielsweise schichtweise ein Bauteil einer Strömungsmaschine aufbaut. Beispielsweise kann ein sogenanntes PDF-LB/M-Verfahren ("Laser-based Powderpad fusion of metals"-Verfahren) verwendet werden. Bei diesem Verfahren erfolgt eine Realisierung einer komplexen Bauteilgeometrie durch ein schichtweises Aufschmelzen und/oder Sintern von Pulverschichten wie beispielsweise einem Metallpulver. Prinzipiell ist es jedoch möglich, die Schaufelanordnung auch mit anderen Herstellverfahren herzustellen. Mit einem Herstellungsverfahren wie beispielsweise einem Gießen und einem spanenden Nachbearbeiten von Leitschaufelelementen ist es oftmals schwierig, Hakenabschnitte genügend groß auszubilden, und diese können nur klein ausgebildet werden. Damit kann jedoch nicht genug Platz für die Ausbildung einer Tasche vorhanden sein, und die Schaufelanordnung kann nicht oder nur schwer ausgebildet werden. Im Gegensatz dazu ist es mithilfe des additiven Herstellungsverfahrens beispielsweise leichter, die Hakenabschnitte größer auszubilden als in einem konventionellen Fall, und die Hakenabschnitte sind leichter von dem Deckband abzutrennen.

Gemäß einer weiteren vorteilhaften Ausgestaltung ist vorgesehen, dass das zumindest eine Dämpfungselement als wellenförmiges Blech ausgebildet ist, das in Umfangsrichtung eine Wellenstruktur aufweist. Mit anderen Worten, das Dämpfungselement kann als Blechfeder ausgebildet sein, wobei das Blech eine elastisch federnde Wirkung aufweist und beim Einsetzen in die Tasche elastisch verformt wird. Mittels einer Reibung der Blechfeder an den Berührpunkten mit dem Leitschaufelelement wird dem Dämpfungselement eine Dämpfungseigenschaft verliehen.

Gemäß einer weiteren vorteilhaften Ausgestaltung ist vorgesehen, dass das zumindest eine Dämpfungselement drahtförmig ausgebildet ist und eine in Umfangsrichtung periodische Formgebung aufweist. Mit anderen Worten, anstatt des Blechs kann das Dämpfungselement drahtförmig ausgebildet sein und kann eine in Umfangsrichtung periodische Form aufweisen. Beispielsweise kann das Dämpfungselement spiralförmig geformt sein oder kann in der Form einer Zylinderfeder geformt sein. Damit ist das Dämpfungselement besonders einfach auszubilden und kann auch auf einfache Weise entlang der Umfangsrichtung geformt werden, um in die Tasche eingefügt zu werden.

Gemäß einer weiteren vorteilhaften Ausgestaltung ist vorgesehen, dass das drahtförmige Dämpfungselement einen ersten Kontaktabschnitt, einen Torsionsabschnitt und einen zweiten Kontaktabschnitt aufweist, wobei das zumindest eine Dämpfungselement entlang der Umfangsrichtung derart ausgebildet ist, dass zwischen dem ersten Kontaktabschnitt und dem zweiten Kontaktabschnitt der Torsionsabschnitt angeordnet ist und wobei der erste und der zweite Kontaktabschnitt des Dämpfungselements dazu eingerichtet sind, das Leitschaufelelement zu berühren, und der Torsionsabschnitt dazu ausgebildet ist, eine Federkraft auf die Kontaktabschnitte auszuüben. Mit anderen Worten, das drahtförmig ausgebildete Dämpfungselement weist in Umfangsrichtung eine periodische Form auf, bei der sich entlang des Dämpfungselements der erste Kontaktabschnitt und der zweite Kontaktabschnitt abwechseln und jeweils der Torsionsabschnitt zwischen dem ersten Kontaktabschnitt und dem zweiten Kontaktabschnitt beziehungsweise zwischen dem zweiten Kontaktabschnitt und dem ersten Kontaktabschnitt eingefügt ist. Der Torsionsabschnitt wirkt durch das Tordieren des Torsionsabschnitts als Torsionsfeder und drückt im montierten Zustand die Kontaktabschnitte gegen die inneren Wände der Tasche des Leitschaufelelements. Die Kontaktabschnitte können halbkreisförmig beziehungsweise gekrümmt ausgebildet sein, und der Torsionsabschnitt kann entlang der Umfangsrichtung verlaufen. In einer Schnittebene eines gedachten Schnittes senkrecht zu der Umfangsrichtung kann das Dämpfungselement C-förmig ausgebildet sein, und beim Einsetzen des Dämpfungselements in die Tasche des Leitschaufelelements kann der erste Kontaktabschnitt in Richtung des zweiten Kontaktabschnitts gebracht werden, um eine Kraft auf die Tasche auszuüben. Bei einer radialen Bewegung der Leitschaufelelemente gegeneinander kann somit eine Reibung entstehen, durch die dem Dämpfungselement die Dämpfungseigenschaft verliehen wird. Eine segmentübergreifende Montage kann mehrere Leitschaufelelemente beziehungsweise Leitschaufelringsegmente miteinander koppeln und gegeneinander koppeln. Es ist möglich, das Dämpfungselement als gesamten Ring auszubilden, der alle Leitschaufelelemente eines Leitschaufelrings miteinander verbindet.

Gemäß einer weiteren vorteilhaften Ausgestaltung ist vorgesehen, dass das Dämpfungselement als C-Blech ausgebildet ist, das um eine parallel zur Umfangsrichtung verlaufende gedachte Achse kreisförmig oder spiralförmig gewickelt ist. Mit anderen Worten, das Dämpfungselement kann als Blech ausgebildet sein, das kreis- beziehungsweise spiralförmig gewickelt ist, wobei die gewickelte kreis- beziehungsweise spiralförmige Blechfeder entlang der Umfangsrichtung gekrümmt sein kann, um in die Tasche des Leitschaufelelements eingefügt zu werden oder zu sein. Mit dieser Ausgestaltung ist eine besonders einfache Ausbildung des Dämpfungselements möglich, das zudem eine Abdichtungswirkung des Inneren der Tasche zu der Außenseite hin aufweist, da das Dämpfungselement an der Innenseite der Tasche einerseits den Hakenabschnitt und andererseits das Deckband (die Plattform) berührt. Mit dieser Ausgestaltung kann eine besonders gute Reibungswirkung des Dämpfungselements in der Tasche des Leitschaufelelements bewirkt werden.

Gemäß einer weiteren vorteilhaften Ausgestaltung ist vorgesehen, dass in der Tasche des Leitschaufelelements ein Impulskörperelement eingefügt ist. Das Impulskörperelement kann hierbei ein einstückig ausgebildetes Aufnahmebauteil und ein einstückig ausgebildetes Verschlussbauteil aufweisen. Hierbei ist das Aufnahmebauteil zur Anordnung von mehreren voneinander getrennten Hohlräumen innerhalb des Aufnahmebauteils ausgebildet. In den Hohlräumen sind Impulskörper wie beispielsweise Kugeln oder ein Pulver aufnehmbar. Das Verschlussbauteil kann materialschlüssig mit dem Aufnahmebauteil verbindbar sein und kann die voneinander getrennten Hohlräume verschließen, die die Impulskörper aufnehmen. Der Impulskörper kann beispielsweise aus einer Keramik hergestellt sein oder eine Keramik aufweisen. Das Impulskörperelement kann mehrere entlang der Umfangsrichtung angeordnete Aufnahmebauteile aufweisen, und die Kugeln beziehungsweise das Pulver in dem Aufnahmebauteil kann derart eingerichtet sein, dass vorbestimmte Frequenzen besonders gut durch die Impulskörper aufgenommen werden und durch Reibung dissipiert werden. Das Impulskörperelement kann in die Tasche des Leitschaufelelements eingefügt werden oder sein und kann benachbarte Leitschaufelelemente miteinander verbinden. Hierbei kann die Tasche des Leitschaufelelements eine Klemmwirkung auf das Impulskörperelement ausüben, sodass das Impulskörperelement besonders vorteilhaft in der Tasche des Leitschaufelelements gehalten sein kann. Das Impulskörperelement kann beispielsweise ein Impulskörpermodul sein, das in der Gebrauchsmusterschrift DE 20 2021 103 804 U1 beschrieben ist.

Gemäß einer weiteren vorteilhaften Ausgestaltung ist vorgesehen, dass in die Plattform jedes Leitschaufelelements zumindest ein Entwölbungsschlitz eingefügt ist, der insbesondere mit der Tasche des Leitschaufelelements in kommunikativer Verbindung steht. Mit anderen Worten, die Plattform beziehungsweise das Deckband jedes Leitschaufelelements kann mittels eines oder mehrerer Entwölbungsschlitze unterbrochen sein, um ein Entwölben des Leitschaufelelements bei Erwärmung zu verhindern beziehungsweise zu reduzieren. Das bedeutet, dass bei Erwärmung das Leitschaufelelement dazu neigen kann, sich zu entwölben beziehungsweise zu strecken, d.h. dass eine Krümmung des Leitschaufelelements in Umfangsrichtung abnehmen kann, was jedoch unerwünscht ist. Ein Entwölbungsschlitz kann eine Entwölbungsneigung verringern beziehungsweise reduzieren. Falls jedoch der Entwölbungsschlitz bis zu den Taschen reicht und somit mit den Taschen in kommunikativer Verbindung steht, die seitlich an dem Leitschaufelelement ausgebildet sind, entsteht ein Leckagepfad, durch den das durch die Strömungsmaschine strömende Gas oder Fluid hindurchtreten kann. Diese Leckageströmung kann jedoch durch das erfindungsgemäße Leitschaufelelement, das als C-Blech beziehungsweise als wellenförmiges Blech ausgebildet ist, verringert beziehungsweise abgedichtet werden. Das bedeutet, dass das Dämpfungselement den Leckagespalt verringert beziehungsweise schließt und die Leckageströmung damit verringern beziehungsweise reduzieren kann.

Gemäß einer weiteren vorteilhaften Ausgestaltung ist vorgesehen, dass das Leitschaufelelement in einem Gehäuse angeordnet ist, wobei das Gehäuse dazu ausgebildet ist, das Dämpfungselement in der Tasche des Leitschaufelelements zu halten und das Gehäuse mit dem Dämpfungselement in direktem Kontakt steht. Mit anderen Worten, in einem montierten Zustand beziehungsweise in einem Betriebszustand ist das Leitschaufelelement zusammen mit dem Dämpfungselement in einem Gehäuse angeordnet. Das Gehäuse hält das Leitschaufelelement über die Hakenabschnitte und ragt in die Hinterschneidung des Leitschaufelelements hinein. Hierbei kann das Gehäuse dazu ausgebildet sein, das Dämpfungselement in der Tasche des Leitschaufelelements zu halten und zu berühren. Damit wird eine besonders vorteilhafte Reibungswirkung durch das Dämpfungselement erzielt, das mit dem Gehäuse in direktem Kontakt steht.

Gemäß einem weiteren Aspekt der vorliegenden Offenbarung ist eine axial durchströmbare thermische Strömungsmaschine mit einer Schaufelanordnung gemäß der vorstehenden Beschreibung bereitgestellt. Durch die vorstehend beschriebenen Vorteile weist die axial durchströmbare thermische Strömungsmaschine eine besonders geringe Vibrationsneigung auf und kann somit besonders vorteilhaft betrieben werden.

Weitere Merkmale der Erfindung ergeben sich aus den Ansprüchen und den Ausführungsbeispielen. Die vorstehend in der Beschreibung genannten Merkmale und Merkmalskombinationen, sowie die nachfolgend in den Ausführungsbeispielen genannten und/oder alleine gezeigten Merkmale und Merkmalskombinationen sind nicht nur in der jeweils angegebenen Kombination, sondem auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Ausführungsbeispielen nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Dabei zeigt:
- Fig. 1: einen Teilbereich eines Leitschaufelelements eines Ausführungsbeispiels in einer schematischen Schnittdarstellung bei Ansicht entlang einer Umfangsrichtung des Leitschaufelelements;
- Fig. 2A: eine schematische Ansicht auf zwei Leitschaufelelemente gemäß einem weiteren Ausführungsbeispiel, die durch ein Dämpfungselement miteinander verbunden sind;
- Fig. 2B: eine schematische Ansicht auf ein Dämpfungselement gemäß einem weiteren Ausführungsbeispiel zur Darstellung einer geometrischen Form des Dämpfungselements;
- Fig. 3A: einen Teilbereich eines Leitschaufelelements gemäß einem weiteren Ausführungsbeispiel in einer schematischen Schnittdarstellung bei Ansicht entlang einer Umfangsrichtung des Leitschaufelelements;
- Fig. 3B: eine schematische Ansicht auf zwei Leitschaufelelemente gemäß einem weiteren Ausführungsbeispiel, die durch das Dämpfungselement miteinander verbunden sind;
- Fig. 4: einen Teilbereich eines Leitschaufelelements gemäß einem weiteren Ausführungsbeispiel in einer schematischen Schnittdarstellung bei Ansicht entlang einer Umfangsrichtung des Leitschaufelelements; und
- Fig. 5: eine schematische Ansicht auf zwei Leitschaufelelemente gemäß einem weiteren Ausführungsbeispiel, die durch das Dämpfungselement miteinander verbunden sind.

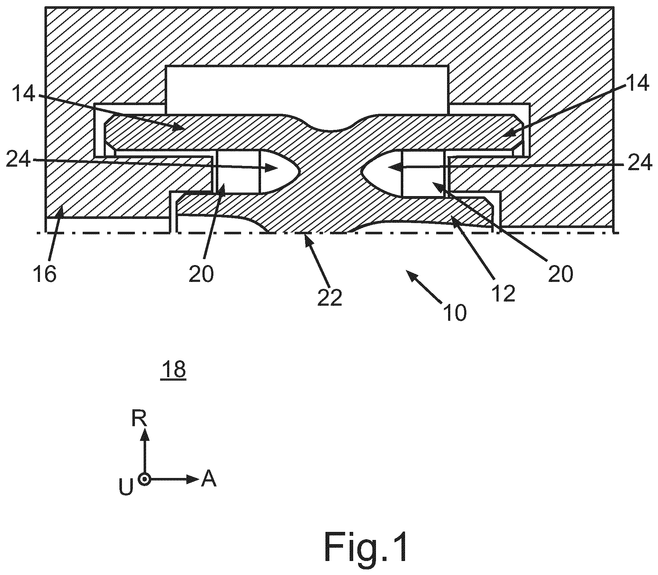

**FIG. 1** zeigt einen Teilbereich eines Leitschaufelelements 10 eines Ausführungsbeispiels in einer schematischen Schnittdarstellung eines gedachten Schnittes senkrecht zu einer Umfangsrichtung U des Leitschaufelelements 10. Das Leitschaufelelement 10 kann Teil einer axial durchströmbaren Strömungsmaschine sein, wobei die Strömungsmaschine beispielsweise eine Gasturbine beziehungsweise eine Fluggasturbine sein kann. Das Leitschaufelelement 10 umfasst ein Deckband beziehungsweise Plattform 12, zumindest einen Hakenabschnitt 14, der zusammen mit der Plattform 12 eine Tasche 24 ausbildet, in die im hier gezeigten Montagezustand ein Dämpfungselement 20 eingefügt ist. Ferner umfasst das Leitschaufelelement 10 ein Schaufelblatt 22, das von der Plattform 12 aus nach radial innen absteht beziehungsweise abragt. Der Hakenabschnitt 14 ist an einer radialen äußeren Seite der Plattform 12 angeordnet. Der Hakenabschnitt 14 bildet in radialer Richtung die Tasche 24 aus, in die das Dämpfungselement 20 eingefügt ist. Die Tasche 24 wird durch den zumindest einen Hakenabschnitt 14, das Leitschaufelelement 10 und die Plattform 12 begrenzt. In axialer Richtung ist die Tasche 24 zu einer Seite hin offen. Vorzugsweise sind zwei Taschen 24 bereitgestellt, die zu der stromabwärtigen Richtung und zu der stromaufwärtigen Richtung hin offen sind. Das zumindest eine Dämpfungselement 20, das in der Tasche 24 jedes Leitschaufelelements 10 der zumindest zwei Leitschaufelelemente 10 angeordnet ist, verbindet zumindest zwei benachbarte Leitschaufelelemente 10 miteinander. Mit anderen Worten, die Leitschaufelelemente 10, die in der Umfangsrichtung U zueinander benachbart sind, werden durch ein jeweiliges Dämpfungselement 20 miteinander verbunden beziehungsweise gekoppelt. Durch eine axiale beziehungsweise radiale Bewegung der Leitschaufelelemente 10 gegeneinander wird eine Reibungswirkung auf das Dämpfungselement 20 erzielt, sodass eine Schwingungsenergie in Reibungswärme umgewandelt werden kann und eine Vibrationsamplitude einer Eigenschwingung des Leitschaufelelements 10 verringert werden kann. Damit ist es möglich, die Leitschaufelelemente 10 und damit die Strömungsmaschine besonders vibrationsarm zu betreiben. Das Schaufelblatt 22 steht in einen Strömungsbereich 18 der Strömungsmaschine hinein. Die Tasche 24 jedes Leitschaufelelements 10 bildet in radialer Richtung eine Hinterschneidung des Leitschaufelelements 10 aus.

Das Leitschaufelelement 10 kann beispielsweise mittels eines additiven Herstellungsverfahrens hergestellt sein. Ein additives beziehungsweise generatives Herstellungsverfahren ist bekannt, bei dem beispielsweise ein Bauteil schichtweise aufgebaut werden kann. Dies kann beispielsweise mittels eines Laser- beziehungsweise Elektronenstrahlschmelz- oder -sinterverfahrens durchgeführt werden. Hierbei kann beispielsweise ein Pulver schichtweise lokal verfestigt werden, indem das Pulver mittels eines Hochenergiestrahls wie beispielsweise eines Laser- beziehungsweise Elektronenstrahls aufgeschmolzen, versintert und/oder verschmolzen wird. Mittels additiver beziehungsweise generativer Fertigungsverfahren lassen sich insbesondere Bauteile mit einer hohen geometrischen Komplexität wie das vorliegend offenbarte Leitschaufelelement 10 einfach herstellen.

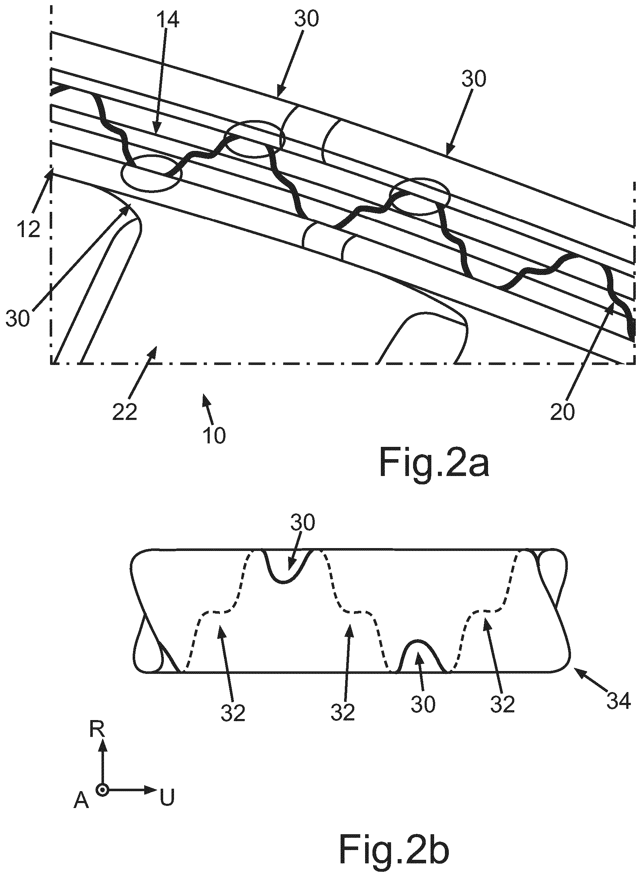

**FIG. 2A** zeigt eine schematische Ansicht auf zwei Leitschaufelelemente 10 gemäß einem weiteren Ausführungsbeispiel, die durch ein Dämpfungselement 20 miteinander verbunden sind. Hierbei kann das Dämpfungselement 20 als wellenförmiges Blech wie beispielsweise in **FIG. 1** gezeigt ausgebildet sein oder kann drahtförmig ausgebildet sein und eine in der Umfangsrichtung U periodische Formgebung aufweisen. Beispielsweise kann das Dämpfungselement 20 federartig geformt, spiralförmig geformt und/oder klammerartig geformt sein. Durch die in der Umfangsrichtung U periodische Formgebung kann eine besonders vorteilhafte einfache Herstellung erzielt werden.

**FIG. 2B** zeigt eine schematische Ansicht auf ein Dämpfungselement 20 gemäß einem weiteren Ausführungsbeispiel zur Darstellung einer geometrischen Form des Dämpfungselements 20. Hierbei kann das Dämpfungselement 20 einen ersten Kontaktabschnitt 30, einen Torsionsabschnitt 32 und einen zweiten Kontaktabschnitt 30 aufweisen, wobei das Dämpfungselement 20 entlang der Umfangsrichtung U derart ausgebildet ist, dass zwischen dem ersten Kontaktabschnitt 30 und dem zweiten Kontaktabschnitt 30 jeweils ein Torsionsabschnitt 32 angeordnet ist. Der erste und der zweite Kontaktabschnitt 30 des Dämpfungselements 20 können jeweils dazu eingerichtet sein, in einem Montagezustand das Leitschaufelelement 10 zu kontaktieren beziehungsweise zu berühren, und der Torsionsabschnitt 32 kann dazu ausgebildet sein, eine Federkraft auf die Kontaktabschnitte 30 auszuüben, indem der Torsionsabschnitt 32 um eine gedachte Achse entlang der Umfangsrichtung U tordiert wird. Jeder Kontaktabschnitt 30 kann halbkreisförmig beziehungsweise gekrümmt ausgebildet sein. Der Torsionsabschnitt 32 kann entlang der Umfangsrichtung U verlaufen. In einer Schnittebene eines gedachten Schnittes senkrecht zu der Umfangsrichtung U kann das drahtförmig ausgebildete Dämpfungselement C-förmig ausgebildet sein und kann entlang einer Zylinderoberfläche eines gedachten Zylinders 34 verlaufen.

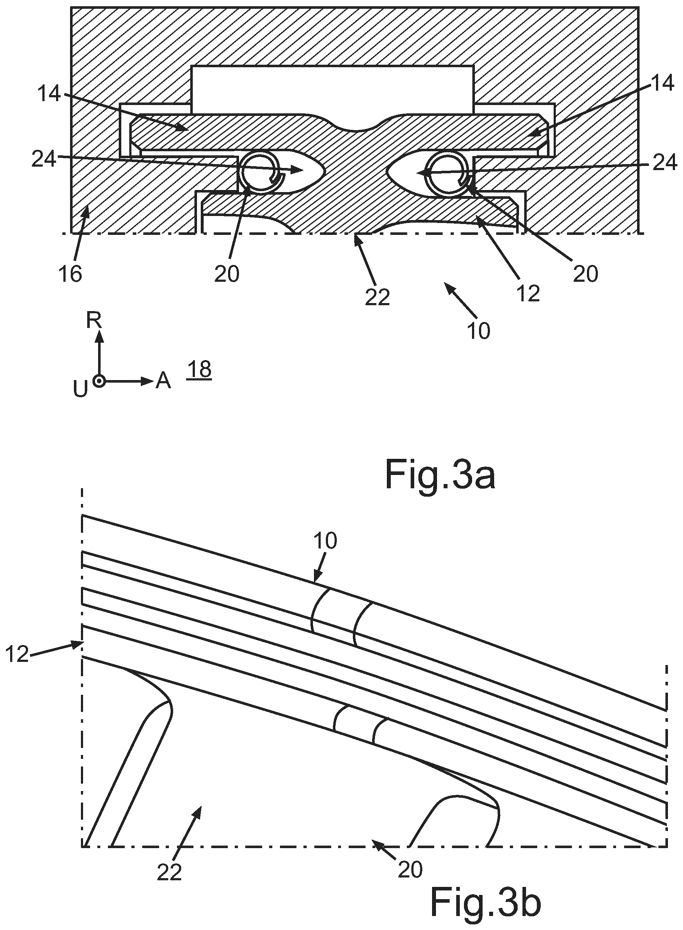

**FIG. 3A** zeigt einen Teilbereich eines Leitschaufelelements 10 gemäß einem weiteren Ausführungsbeispiel in einer schematischen Schnittdarstellung bei Ansicht entlang einer Umfangsrichtung U des Leitschaufelelements 10. Gemäß diesem Ausführungsbeispiel ist das Dämpfungselement 20 als C-Blech ausgebildet und weist eine Form auf, bei der das C-Blech um eine parallel zu der Umfangsrichtung U verlaufende gedachte Achse kreisförmig beziehungsweise spiralförmig gewickelt ist. Damit bildet das C-Blech eine Blechfeder, die in der Ebene von FIG. 3A eine spiral- beziehungsweise kreisförmige Form aufweist. Damit wirkt durch die Blechfeder eine Kraft auf die Berührpunkte zwischen dem Dämpfungselement 20 und dem Leitschaufelelement 10, sodass eine Reibungswirkung erzielt wird.

**FIG. 3B** zeigt eine schematische Ansicht auf zwei Leitschaufelelemente 10 gemäß einem weiteren Ausführungsbeispiel, die durch das Dämpfungselement 20 miteinander verbunden sind. Wie vorstehend genannt, kann das Dämpfungselement 20 als C-Blech ausgebildet sein und kann in die Tasche 24 des Leitschaufelelements 10 beziehungsweise der Leitschaufelelemente 10 eingefügt sein. Durch das Dämpfungselement 20 wird in diesem Fall auch eine Abdichtungswirkung der Tasche 24 gegenüber einem äußeren Strömungsbereich 18 erzielt. Falls ein Gehäuse 16 um das Leitschaufelelement 10 gemäß **FIG. 3A** angeordnet ist, kann zudem eine Abdichtungswirkung durch eine Berührung mit dem Gehäuse 16 erzielt werden.

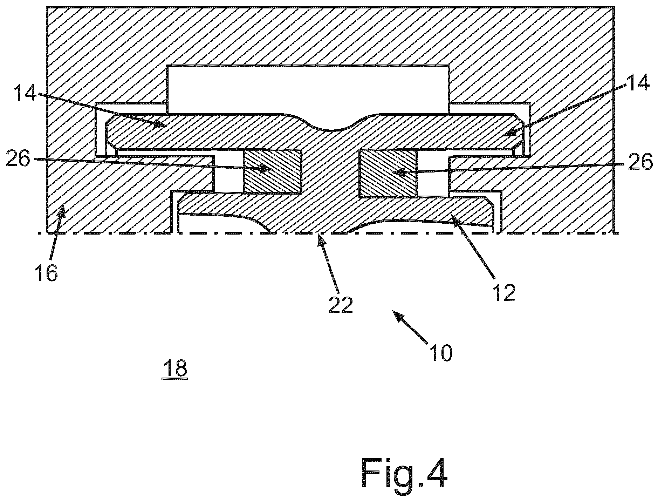

**FIG. 4** zeigt einen Teilbereich eines Leitschaufelelements 10 gemäß einem weiteren Ausführungsbeispiel in einer schematischen Schnittdarstellung bei Ansicht entlang der Umfangsrichtung U des Leitschaufelelements 10. Bei diesem Ausführungsbeispiel ist in der Tasche 24 des Leitschaufelelements 10 ein Impulskörperelement 26 eingefügt. Das Impulskörperelement 26 kann ein einstückig ausgebildetes Aufnahmebauteil und ein einstückig ausgebildetes Verschlussbauteil aufweisen. Das Aufnahmebauteil kann zur Anordnung mehrerer voneinander getrennter Hohlräume innerhalb des Aufnahmebauteils ausgebildet sein. Hierbei können in den Hohlräumen Impulskörper aufgenommen sein. Die Impulskörper können Kugeln beziehungsweise ein Pulver sein. Das Verschlussbauteil kann materialschlüssig mit dem Aufnahmebauteil verbunden sein. Ferner kann in dem Aufnahmebauteil eine Mehrzahl von Hohlräumen ausgebildet sein, in denen jeweils ein Impulskörper aufnehmbar ist. Das Verschlussbauteil kann hierbei auch als Deckel bezeichnet werden. Mit anderen Worten, das Impulskörperelement kann beispielsweise Kugeln in jeweiligen eigenen Abteilungen aufweisen. Das Impulskörperelement kann ausgebildet sein, um eine mögliche Schwingungsmode beziehungsweise mögliche Schwingungsmoden in einem Betriebszustand der Strömungsmaschine zumindest zu minimieren. Hiermit kann eine besonders bevorzugte Schwingungsminimierung erzielt werden.

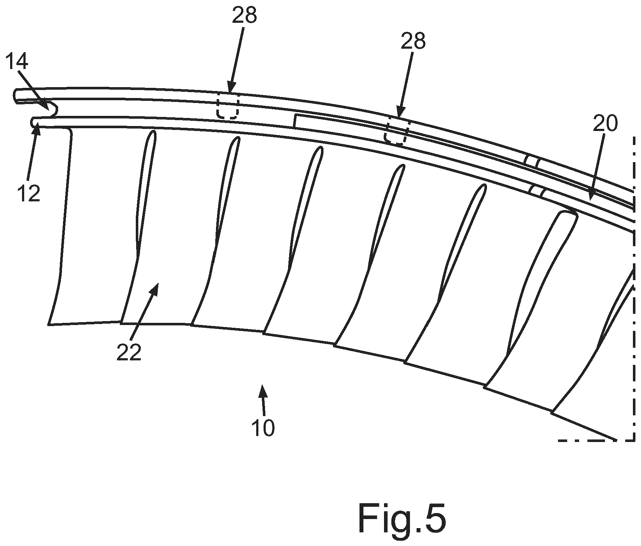

**FIG. 5** zeigt eine schematische Ansicht auf zwei Leitschaufelelemente 10 gemäß einem weiteren Ausführungsbeispiel, die durch das Dämpfungselement 20 miteinander verbunden sind. Hierbei kann in der Plattform 12 jedes Leitschaufelelements 10 zumindest ein Entwölbungsschlitz 28 eingefügt sein, der zu der Tasche 24 des Leitschaufelelements 10 in kommunikativer Verbindung stehen kann. Mittels des Entwölbungsschlitzes 28 kann eine Entwölbungsneigung des Leitschaufelelements 10 bei Erwärmung verringert werden, und es kann eine Entwölbung beziehungsweise Streckung des Leitschaufelelements 10 verringert werden, die unerwünscht ist. Falls der Entwölbungsschlitz 28 bis zu den Taschen 24 beziehungsweise bis zu der Tasche 24 reicht, entsteht ein Leckagepfad. Dieser kann durch das Dämpfungselement 20 abgedichtet werden, wobei das Dämpfungselement 20 beispielsweise als C-Blech oder als Impulskörperelement 26 gemäß der vorstehenden Beschreibung ausgebildet sein kann. Das Dämpfungselement 20 schließt hierbei den Spalt und verringert einen Leckagepfad zwischen dem Entwölbungsschlitz 28 und einem Strömungsbereich 18 der Strömungsmaschine. Falls das Leitschaufelelement 10 in einem Gehäuse 16 angeordnet ist, kann das Gehäuse 16 dazu ausgebildet sein, das Dämpfungselement 20 in der Tasche 24 des Leitschaufelelements 10 zu halten, und das Gehäuse 16 kann mit dem Dämpfungselement 20 kann in direktem Kontakt stehen. Damit kann das Dämpfungselement 20 durch das Gehäuse 16 gehalten sein, und durch Reibung an dem Leitschaufelelement 10 beziehungsweise dem Gehäuse 16 kann eine besonders vorteilhafte Dämpfungswirkung erzielt werden.

### Bezugszeichenliste:

- 10: Leitschaufelelement
- 12: Plattform
- 14: Hakenabschnitt
- 16: Gehäuse
- 18: Strömungsbereich
- 20: Dämpfungselement
- 22: Schaufelblatt
- 24: Tasche
- 26: Impulskörperelement
- 28: Entwölbungsschlitz
- 30: Kontaktabschnitt
- 32: Torsionsabschnitt
- A: Axialrichtung
- R: Radialrichtung
- U: Umfangsrichtung

## Patentansprüche

1. Schaufelanordnung für eine axial durchströmbare thermische Strömungsmaschine, umfassend einen Leitschaufelring mit
- zumindest zwei entlang einer Umfangsrichtung (U) der Strömungsmaschine angeordneten Leitschaufelelementen (10),
wobei jedes Leitschaufelelement (10) der zumindest zwei Leitschaufelelemente (10) zumindest ein Schaufelblatt (22) aufweist, das an seinem radial äußeren Ende eine mit dem zumindest einen Schaufelblatt (22) einstückig verbundene Plattform (12) umfasst,
wobei von der Plattform (12) an dessen radial äußerer Seite zumindest ein Hakenabschnitt (14) in radialer Richtung abragt,
wobei der zumindest eine Hakenabschnitt (14) in radialer Richtung eine Tasche (24) des Leitschaufelelements (10) ausbildet, die durch den zumindest einen Hakenabschnitt (14), das Leitschaufelelement (10) und die Plattform (12) begrenzt ist und in axialer Richtung der Strömungsmaschine zu einer Seite hin offen ist, und
- zumindest einem Dämpfungselement (20), das in der Tasche (24) angeordnet ist.

2. Schaufelanordnung nach Anspruch 1, wobei die Tasche (24) jedes Leitschaufelelements (10) der zumindest zwei Leitschaufelelemente (10) in radialer Richtung (R) eine Hinterschneidung des Leitschaufelelements (10) ausbildet.

3. Schaufelanordnung nach einem der vorhergehenden Ansprüche, wobei jedes Leitschaufelelement (10) der zumindest zwei Leitschaufelelemente (10) mittels eines additiven Herstellungsverfahrens hergestellt ist.

4. Schaufelanordnung nach einem der vorhergehenden Ansprüche, wobei das zumindest eine Dämpfungselement (20) als wellenförmiges Blech ausgebildet ist, das in der Umfangsrichtung (U) eine Wellenstruktur aufweist.

5. Schaufelanordnung nach einem der vorhergehenden Ansprüche, wobei das zumindest eine Dämpfungselement (20) in der Umfangsrichtung (U) zumindest zwei benachbarte Leitschaufelelemente (10) verbindet.

6. Schaufelanordnung nach Anspruch 5, wobei das zumindest eine Dämpfungselement (20) einen ersten Kontaktabschnitt (30), einen Torsionsabschnitt (32) und einen zweiten Kontaktabschnitt (30) aufweist, wobei das zumindest einen Dämpfungselement (20) entlang der Umfangrichtung derart ausgebildet ist, dass zwischen dem ersten Kontaktabschnitt (30) und dem zweiten Kontaktabschnitt (30) der Torsionsabschnitt (32) angeordnet ist, wobei der erste und der zweite Kontaktabschnitt (30) des Dämpfungselements (20) dazu eingerichtet sind, das Leitschaufelelement (10) zu berühren und der Torsionsabschnitt (32) dazu ausgebildet ist, eine Federkraft auf die Kontaktabschnitte (30) auszuüben.

7. Schaufelanordnung nach einem der vorhergehenden Ansprüche, wobei das Dämpfungselement (20) als C-Blech ausgebildet ist, das um eine parallel zu der Umfangsrichtung (U) verlaufende gedachte Achse kreisförmig oder spiralförmig gewickelt ist.

8. Schaufelanordnung nach einem der vorhergehenden Ansprüche, wobei in der Tasche (24) des Leitschaufelelements (10) ein Impulskörperelement (26) eingefügt ist.

9. Schaufelanordnung nach einem der vorhergehenden Ansprüche, wobei in die Plattform (12) jedes Leitschaufelelements (10) zumindest ein Entwölbungsschlitz (28) eingefügt ist, der insbesondere mit der Tasche (24) des Leitschaufelelements (10) in kommunikativer Verbindung steht.

10. Schaufelanordnung nach einem der vorhergehenden Ansprüche, wobei das Leitschaufelelement (10) in einem Gehäuse (16) angeordnet ist, wobei das Gehäuse (16) dazu ausgebildet ist, das Dämpfungselement (20) in der Tasche (24) des Leitschaufelelements (10) zu halten und das Gehäuse (16) mit dem Dämpfungselement (20) in direktem Kontakt steht.

11. Axial durchströmbare thermische Strömungsmaschine mit einer Schaufelanordnung nach einem der vorhergehenden Ansprüche.
